# EUROPEAN PATENT APPLICATION

(11) **EP 4 796 426 A1**
(43) Date of publication of application: **26.08.2026**
(21) Application number: 25158901.6
(22) Date of filing: 19.02.2025
(51) Int. Cl.: B63B 3/06, B63B 3/08, B63B 35/34, B63B 35/38, B63B 35/44, B63C 1/02

(54) **MODULAR FLOATING UNIT, ASSEMBLY OF MODULAR FLOATING UNITS, AND METHOD OF ATTACHING A MODULAR FLOATING UNIT**

(71) Applicant: Wotel Sp. z o.o. Sp. k., 32-002 Wegrzce Wielkie (PL)
(72) Inventor: Bielec, Piotr, Krakow (PL)
(74) Representative: AOMB Polska Sp. z.o.o.

(57) **Abstract**

The solution relates to a modular floating unit comprising a floating platform (10) a floating platform (10) comprising at least two modules (1), wherein individual module (1) comprises a pontoon, the modules (1) are arranged to be submerged below the waterline, and a grid of the floating platform which is secured on at least two modules (1) and positioned above the waterline, at least four securing assembles which are arranged to connect the floating platform to a superstructure unit, the superstructure unit which is connected to the floating platform by means of the securing assembly. Wherein the securing assembly comprises a positioning pin (4) which is mounted on the floating platform, and a mounting pole (8) secured at the bottom side of the superstructure unit and arranged to be superimposed onto the positioning pin (4), wherein the mounting poles (8) and positioning pins (4) are configured for uniform distribution of the load of the superstructure unit on the floating platform. Another aspect of the solution is an assembly of modular floating units, comprising at least two modular floating units and a series-row securing assembly, arranged to connect at least two modular floating units. Another aspect of the solution is a method for attaching a modular floating unit.

## Description

### Field of the Invention

The invention provides a modular floating unit, more particularly a connection of a floating platform to a superstructure unit.

### Prior Art

Document US11242117B2 discloses a modular platform comprising a floating structure with its bottom portion submerged in water and a platform structure positioned on its upper part. The platform is modular due to its frame structure which enables connection of two platforms to each other. One of the elements described in the document is that the structure, namely a frame made of double-tee profiles, has safety poles which pay a role of shafts onto which a floor plate is superimposed. The poles are positioned at four corners of the platform.

Document WO2018161522A1 discloses a system comprising a main vessel, an auxiliary vessel and a fuel station. The main vessel is a houseboat floating on the water and the auxiliary vessel propels the main floating unit. The auxiliary vessel is detachably installed at the bottom of the main vessel. The auxiliary vessel is connected to the main vessel by a connecting device. The connecting device consists of several positioning holes and a telescopic rod. The positioning holes are located at the fore and aft ends of the construction platform on the main vessel. The telescopic rods are fixed on the auxiliary vessel and are in a position corresponding to the positioning hole.

Solutions known from the prior art, such as barges or houseboats, are characterised by a considerable weight, high draught and difficulties in transport and assembly. Their construction process is time consuming and costly, and their operation requires regular and costly maintenance at shipyards, requiring the entire floating unit to be taken out of service for long periods of time.

An additional limitation is that traditional floating units cannot be modified or expanded, making it impossible to adapt their functions to changing needs of the users. These objects are not modular which makes it very difficult to transport and install them in different locations, especially in enclosed waters.

### Summary of the Invention

It is the purpose of the invention to provide a modular floating unit which is adjustable to local hydrological conditions.

A solution discloses a modular floating unit comprising
a floating platform comprising at least two modules, wherein individual module comprises a pontoon, the modules are arranged to be submerged below the waterline, and a grid of the floating platform which is secured on at least two modules and positioned above the waterline, at least four securing assembles which are arranged to connect the floating platform to a superstructure unit, the superstructure unit which is connected to the floating platform by means of the securing assembly. The securing assembly comprises a positioning pin which is mounted on the floating platform, and a mounting pole secured at the bottom side of the superstructure unit and arranged to be superimposed onto the positioning pin, wherein the mounting poles and positioning pins are configured for uniform distribution of the load of the superstructure unit on the floating platform.

In a preferred embodiment, the pontoon of the module is a cuboid steel pontoon.

Preferably, the module comprises angle brackets which are secured at the upper portion of the module, wherein the upper portion of the pontoon corresponds to the portion being closer to the grid of the floating platform, and they are configured to be secured with the grid of the floating platform.

The floating platform comprises five modules connected to each other.

In a preferred embodiment, the modules in the floating platform are mutually connected by securing elements, preferably screws.

The positioning pins are mounted on the grid of the floating platform at positions corresponding to the corners of the individual module, wherein the positioning pin comprises a hole extending along its full length.

Preferably, the mounting poles are positioned at places corresponding to the positions of the positioning pins.

In a preferred embodiment, the securing assembly comprises a stabilizing bar, a clamping socket, and strengthening elements, wherein the clamping socket is arranged to be secured at the upper portion of the mounting pole, wherein the upper portion corresponds to the portion being closer to the superstructure unit, wherein the stabilizing bar is arranged to be positioned within the mounting pole and the positioning pin.

Preferably, it comprises a mooring system for the floating platform comprising at least one rigid mooring fast and at least mooring line, wherein the rigid mooring fasts comprise Cardan joints.

Another aspect of the solution is an assembly of modular floating units, comprising at least two modular floating units, and a series-row securing assembly, arranged to connect at least two modular floating units.

Preferably, the series-row securing assembly comprises supports secured on both modules positioned in series of at least two individual modular floating units, and a bolt which is arranged to connect the supports of the two modules positioned in series.

Preferably, the grids of the floating platforms of at least two individual modular floating units are connected to each other by means of securing elements, preferably screws.

The third aspect of the solution is a method for attaching a modular floating unit, comprising the steps of:
a) Providing of a floating platform with positioning pins secured thereto,
b) Providing of a superstructure unit with mounting poles mounted thereto,
c) Positioning of the superstructure unit over the floating platform to position the mounting poles (8) and superimpose them into the positioning pins,
d) Descending of the superstructure unit onto the floating platform,
e) Connecting of the superstructure unit to the floating platform.

Preferably, step e) of connecting of the superstructure unit to the floating platform comprises step e1) of securing of the clamping socket in the upper side of the mounting pole, step e2) of inserting of the stabilizing bar through the clamping socket into the mounting pole and the positioning pin, and securing in the floating platform, step e3) of securing and tightening of strengthening elements at both ends of the stabilizing bar.

### Advantageous Effects of the Invention

The solution enables effective transfer of dynamic and static loads, ensuring the stability of the floating unit. This construction allows modification of dimensions and intended use at any time, minimising the risk of loss of revenue during maintenance or upgrades. In addition, the modular concept facilitates transport of individual parts, allowing for installing them in waters heretofore inaccessible to traditional floating structures. The solution enables the transfer of dynamic and static loads, providing stability in hard weather conditions such as fluctuating water levels, strong currents or occurrence of waves. This makes it possible to locate the solution on almost any body of water.

### Brief Description of the Drawings

The invention will be presented in more detail in a preferable embodiment with reference to the attached drawings where:
Fig. 1- shows a system for connecting of modules in series, in a top view,
Fig. 2 - shows a system for mooring a floating platform, in a top view,
Fig. 3 - shows a positioning pin, in an isometric view,
Fig. 4 - shows securing of a positioning pin along with a mounting pole and stabilizing bar, in cross-section.

### Detailed Description of Preferable Embodiment of the Invention

The subject-matter of the solution is a modular floating unit comprising a floating platform, a superstructure unit and a securing assembly. The floating platform is an element on which the superstructure unit is secured being a building. The superstructure is a construction which is positioned above the waterline. It may have a residential, recreational or technical function. The superstructure may comprise a building and footways, porches and other structures.

Modular construction of the floating platform means that the platform is built from separate repeatable modules which may be combined into various configurations as may be the need. Such construction enables easy mounting, demounting, transporting and modifications to the size and shape of the platform. It may be used in pontoons, jetties, barges or mobile water structures.

The floating platform comprises at least two modules 1 which are submerged below the waterline and a grid of the floating platform which is arranged above the waterline. An individual module 1 comprises a pontoon which is a carrying pontoon. The grid of the floating platform is secured on at least two modules 1 and it constitutes a functional surface of the floating platform.

The pontoon is designed to maximize the displacement by limitation of the draught and to ensure resistance to mechanic damage and corrosion. Within the pontoon displacement chambers and filling chambers may be arranged for additional safety enhancement.

Preferably, the pontoon has a form of cuboids made of steel panels which define a robust, tight and resistant construction. Preferably, module 1 has angle brackets secured on the pontoon. The angle brackets, which constitute a stiffening means for the wall metal sheets of the pontoon, are welded to the steel panels of the pontoons vertically. The upper portion of the pontoon is preferably provided with a collar made of angle brackets to stiffen of the construction and which also serve as mounting points for securing of the grid of the floating platform as well as to provide stability and easy installation. The use of angle brackets enables obtaining the possible lowest weight of the entire construction. Preferably, the grid of the floating platform is made of hot-rolled IPE or C sections welded together to each other. The upper portion of the pontoon corresponds to the closer portion of the grid of the floating platform.

The solution also includes a securing assembly which is arranged to connect a floating platform to a superstructure unit. An individual module 1 is preferably secured via four units of the securing assembly to the superstructure unit. The securing assembly is welded onto the upper portion of the grid of the floating platform and then it is directly connected to the superstructure unit. This way a stable and durable connection of the individual components is obtained that enhances rigidity and strength of the construction. This solution also enables uniform distribution of loads and minimises the risk of loosening of the connection as a result of the use on water.

The securing assembly comprises a positioning pin 4 which is secured to the floating platform and a mounting pole 8 secured at the bottom side of the superstructure unit which is arranged to be superimposed onto the positioning pin 4.

In this example, positioning pins 4 are secured on the grid of the floating platform at positions that correspond to the corners of an individual module, and more specifically a pontoon. Preferably, the positioning pin 4 is made of steel. Preferably, it may be a circular or rectangular in cross-section. The upper horizontal edges of the positioning pin 4 are bevelled in order to facilitate positioning of the mounting pole 8 of the securing assembly secured on the superstructure unit. The positioning pin 4 comprises a hole arranged for passing a stabilizing bar 5 therethrough along its entire length.

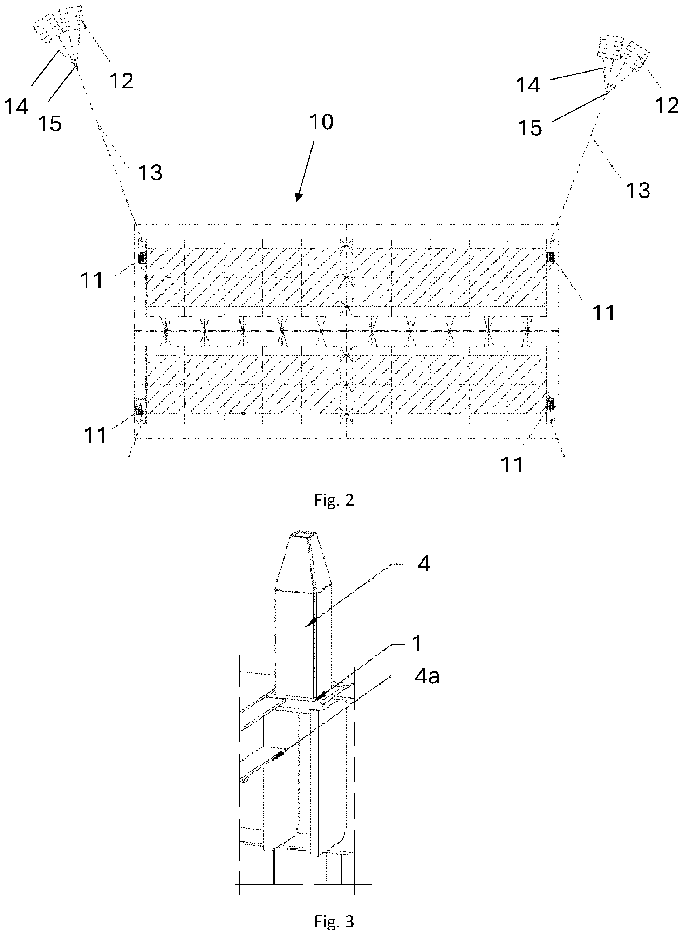

The positioning pin 4 is shown in Fig. 3 along with the base of the pin 4a. The base of the pin 4a is arranged for accurate securing of the positioning pin 4. It comprises a hole for a stabilizing bar 5 and receives all the force acting on the bar 5 upon it is screwed in place. The base of the pin 4a has an important function for servicing and maintenance of the modular floating unit. If the positioning pin 4 were directly welded to the pontoon, it would not be possible to extract or slide out of the pontoon from below the superstructure unit. In this arrangement it is possible to cut the base of the pin 4a at two points in order to remove the pin freely.

A considerable number of positioning pins 4 and mounting poles 8 provide uniform distribution of load of the superstructure on the floating platform and this is important for the stability of the entire construction under changing weather conditions. Due to suitable positioning of these elements, the load is distributed into a larger area of the floating platform and this minimizes the risk for overload at individual spots and prevents deformation. Such a system ensures not only constructional strength but also its resistance to changing water conditions such as waves or winds, as well as dynamic loads.

Preferably, mounting poles 8 are positioned at points that correspond to the positions of the positioning pins 4 on the floating platform. This positioning provides mounting points implemented by means of the securing assembly at the corners of the superstructure unit. The superstructure unit preferably covers the floating platform entirely. This positioning of the mounting poles 8 enables accurate superimposing thereof onto the positioning pins 4, and this ensures stable and secure connection and at the same time facilitates assembling of the entire construction. Preferably, the mounting pole 8 is made from a cylindrical tube made of steel. It may be also made from a tube with a square or rectangular cross-section.

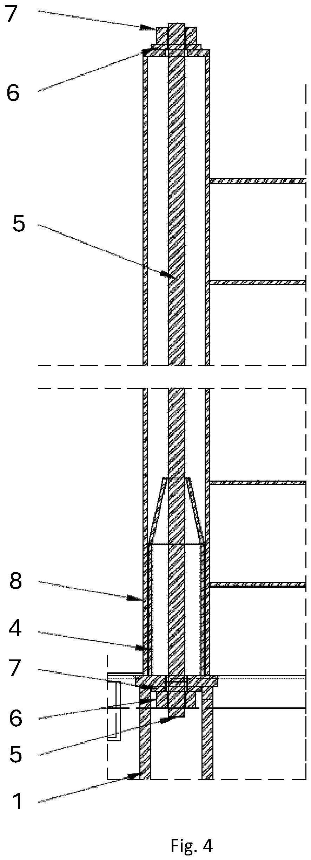

In another embodiment, the securing assembly comprises a stabilizing bar 5, a clamping socket 7 and a strengthening element 6. These elements are shown in Fig. 4. The clamping socket 7 is arranged to be mounted on the upper portion of the mounting pole 8. In this example, the upper portion corresponds to the portion positioned closer to the superstructure unit. The clamping socket 7 is made from a tubular section and a closing metal sheet with a hole arranged on the axis thereof. This solution is possible when the mounting pole 8 has a form of a cylindrical bar. For other shapes of the pole 8, the section and the closing metal sheet are correspondingly selected to match the cross-section thereof, and the hole is still positioned centrally in the closing metal sheet. The mounting socket 7 is also preferably secured upon positioning of the stabilizing bar 5 inside the mounting pole 8 and the mounting pin 4, at the other end of the stabilizing bar 5.

The stabilizing bar 5 is arranged to be positioned inside the mounting pole 8 and the mounting pin 4.

Due to the use of positioning pins 4 which facilitate proper positioning, and stabilizing bars to provide rigidity of the construction, the modular superstructure unit may be mounted on the floating platform in a fast and accurate manner. This solution minimizes the risk of assembly faults, increases stability of the entire structure and enables easy disassembling and reconfiguration according to the user needs.

Stabilization of the superstructure unit is carried out by means of the use of stabilizing bars 5 which have a critical function in providing durable and safe connection of the module-comprising floating platform with the superstructure unit. Stabilizing bars 5 effectively reduce effects of dynamic loads such as waves, water currents or strong wind, and this enhances stability of the entire construction. Suitably selected materials and geometry cause that the stabilizing bar 5 exhibits a high resistance to corrosions and changing environment conditions. This solution enables safe operation of the module, even under demanding water conditions. The strengthening element 6 preferably is a washer or a nut.

Preferably, the floating platform comprises five modules connected mutually.

In the embodiment shown, it is possible to configure the modules in various arrangements. Modules may be positioned in an in-series arrangement, as well as in a serial-row configuration to enable effective positioning thereof in space. Additionally, it is possible to expand the structure by positioning of further levels of modules to make it possible to obtain of a multilevel construction according to specific water requirements. Modular nature of the floating platform facilitates transport and assembling at any place. Connection of a further level of modules in a multilevel version is effected by means of a securing assembly which encompasses a positioning pin 4, a mounting pole 8, a stabilizing bar 5 and strengthening elements 6.

Preferably, in this embodiment, modules 1 of the floating platform are mutually connected by means of securing elements, preferably screws. Preferably, the screws are HV screws.

Modular construction of the floating platform enables easy replacement, rebuilding or servicing of the individual modules without any necessity for taking the entire floating unit out of service. This is why continuous operation of the facility is possible, and at the same time a possibility for flexible adjustment of its configuration according to the current needs is maintained. This solution increases operational effectiveness, minimizes downtimes and facilitates servicing and retrofitting of the platform. It is possible to assemble and disassemble modules repeatedly without any damage to the construction, and this characteristics enables modifications in the building layout, expansion, rebuilding, annexing with modification of the arrangement of the platforms at the same time to be carried out. Disassembling or adding of individual modules also makes it possible for a change of the intended use of the facility.

Fig. 2 shows a method of mooring which adjusts its length according to the water level to provide constant rigidity and stable positioning of the unit.

In this embodiment, the floating unit comprises a system for mooring of a floating platform at a wharf. In this example, the mooring system comprises at least one rigid mooring fast 14 and at least mooring line 13. The rigid mooring fast 14 preferably comprises Cardan joints 15 positioned at both ends of the rigid mooring fast 14. The joint 15 allows for a movement in the vertical plane, which is in the ascending and descending direction. The Cardan joints 15 enable tilts of the floating platform and pitching within an angle of ±7°. The mooring system is shown in Fig. 2.

In this example, rigid mooring fasts are made from cylindrical steel tubes. In this example, mounting points of the rigid mooring fasts 14 and the mooring lines 13 are located in one plane on the floating platform 10, preferably, they are mounted to the grid of the floating platform. Due to the use of rigid mooring fasts 14 and mooring lines 13 it is possible for the floating platform 10 to raise and drop. The mooring system according to the invention provides stability of the floating platform 10, even with a changing water level and strong weather fluctuations. Assembling is carried out by means at least one anchor 12 at the target substrate.

The rigid mooring fasts 14 are preferably secured to the wharf. The mooring lines 13 are necessary in situations in which the unit is moored in water regions with flowing waters or in regions with strong winds. their resilience enables compensation of forces resulting from the current and blasts of winds to which some rigid mooring fasts 14 are particularly prone. Compensation of tilts depends on the use of rigid mooring fasts and mooring lines which together counteract the forces acting on the unit from the water.

Preferably, a system of rigid mooring fasts 14 and mooring lines 13 is secured to the floating platform 10 by means of a winch 11 which is arranged for adjustment of the tension in the mooring lines 13. Differences in lengths of the mooring lines 13, resulting from fluctuations of the water level, are corrected on an ongoing basis at the winches.

Another aspect of the invention is an assembly of modular floating units comprising at least two modular floating units according to the heretofore provided specification and an assembly for serial-row securing, arranged for connecting at least two modular floating units.

In this embodiment, at least two modules in the floating platform are mutually connected by means of a serial-row securing assembly. This assembly enables stable and durable connection of pontoons in one line - in series, side by side in one line, and in a 2 x 2 arrangement, as shown in Fig. 2. With this solution, uniform distribution of loads is obtained as well as increased stability of the entire floating platform and this is of particular interest in applications which require high load capacity and resistance to hydrodynamic forces.

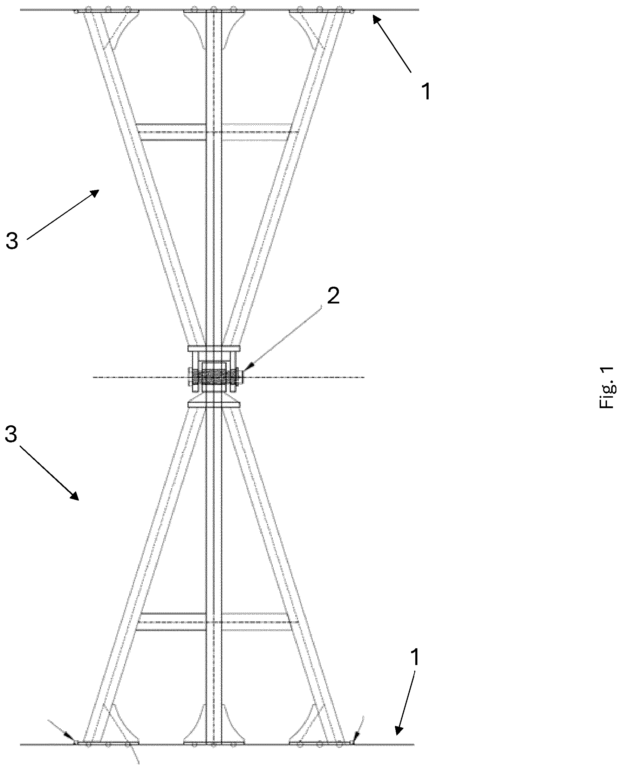

In this example, a system for serial connection comprises supports 3 and bolts 2 which are shown in Fig. 1. Each pontoon, module 1, arranged in the series comprises supports 3 positioned at its both sides. The two-side distribution of supports 3 enables flexible management of the configuration of the floating platform by adding or removing modules 1. As a result, it is possible do adjust its overall dimensions according to the current operational needs and this makes it possible to optimize its load capacity, stability and functionality of the platform according to the operational conditions. The presented connecting method provides rigid and stable connection.

Connections of pontoons provide tightness due to their very close arrangement and bolt locking at the supports. Additionally, for more security, between the elements being connected a EPDM membrane strip is inserted to seal any possible local gaps present after pressing.

The supports 3 are positioned opposite to each other on adjacent pontoons and this makes it possible to connect them to each other. This connection is effected by means of a bolt 2 which passes through the holes in the opposite supports 3 to provide durable and stable coupling of the pontoons. This manner of connecting provides strength of the construction and resistance to dynamic loads and forces that are applied to the construction during operation on water.

A further aspect of the invention is a method of attaching a modular floating unit. The method comprises the following steps:
a) Providing a floating platform with positioning pins 4 secured thereto,
b) Providing a superstructure unit with mounting poles 8 secured thereto,
c) Positioning of the superstructure unit over the floating construction to position and superimpose the mounting poles 8 onto the positioning pins 4,
d) Descending of the superstructure unit onto the floating platform,
e) Securing the superstructure unit to the floating platform.

Steps a) an b) encompass preparation of a floating platform with positioning pins 4 secured thereto and a superstructure unit with mounting poles 8 mounted thereto. The positioning pins 4 and the mounting poles 8 are arranged in a manner to provide their mutual adjustment to match their reciprocal positions.

Step c) encompasses positioning of the superstructure unit over the floating platform, and the process is preferably carried out with the use of a hoisting crane. The crane enables accurate lifting and positioning of the superstructure unit in a correct position to minimize risk of mismatching and to make further mounting steps easier. Due to the use of the hoisting crane it is also possible to control the speed and direction of descending of the superstructure, and this enhances safety of the operation and provides accurate superimposing of the mounting poles 8 onto the positioning pins 4.

Step d) encompasses descending of the superstructure unit onto the floating platform. Descending of the superstructure unit is carried out progressively until the bottom ends of the mounting poles 8 contact the surface of the floating platform, and more precisely the grid of the construction. Accurate descending is necessary for further correct coupling of all the mounting elements, including possible connection to the positioning pins 4.

Step e) encompassing stable connecting of the superstructure unit to the floating platform and this is the crucial step for providing durability of the entire structure. This connection is carried out by means of a securing assembly which comprises the positioning pin 4 and the mounting pole 8. Such system of connections not only ensures safe assembling but also long-lasting strength of the construction and makes it withstand hard atmospheric and water conditions. Due to the use of this kind of connection, the whole unit becomes more resistant to dynamic loads and to forces that act thereon during use, to enable maintaining of stability and integrity of the construction for a long time.

In this example, step e) of securing of the superstructure unit with the floating platform comprises step e1) of securing of a clamping socket on the upper side of the mounting pole 8, step e2) of inserting of a stabilizing bar 5 through the clamping socket 7 into the mounting pole 8 and the positioning pin 4, as well as securing in the floating platform, step e3) of securing and tightening of strengthening elements 6 at both ends of the stabilizing bar.

In this embodiment, step e2) comprises inserting of the stabilizing bar 5 though the mounting pole 8 along its full length, and the inserting into a hole of the positioning pin 4. In this embodiment, step e3) comprises securing of the strengthening element 6 formed as washers on both of the stabilizing bars and then tightening of the strengthening elements 6 formed as nuts at both ends of the stabilizing bar. Fig. 4 shows the abovementioned securing of the mounting pole 8 and the positioning pin 4 along with the stabilizing bar.

## Claims

1. A modular floating unit, comprising:
a floating platform (10) comprising at least two modules (1), wherein individual module (1) comprises a pontoon, the modules (1) are arranged to be submerged below the waterline, and a grid of the floating platform which is secured on at least two modules (1) and positioned above the waterline,
at least four securing assembles which are arranged to connect the floating platform to a superstructure unit,
the superstructure unit which is connected to the floating platform by means of the securing assembly,
wherein the securing assembly comprises a positioning pin (4) which is mounted on the floating platform, and a mounting pole (8) secured at the bottom side of the superstructure unit and arranged to be superimposed onto the positioning pin (4),
wherein the mounting poles (8) and positioning pins (4) are configured for uniform distribution of the load of the superstructure unit on the floating platform.

2. The modular floating unit according to claim 1, **characterized in that** the pontoon of the module (1) is a cuboid steel pontoon.

3. The modular floating unit according to claims 1 or 2, **characterized in that** the module (1) comprises angle brackets which are secured at the upper portion of the module (1), wherein the upper portion of the pontoon corresponds to the portion being closer to the grid of the floating platform, and they are configured to be secured with the grid of the floating platform.

4. The modular floating unit according to claims 1, 2, or 3, **characterized in that** the floating platform comprises five modules (1) connected to each other.

5. The modular floating unit according to any one of the preceding claims, **characterized in that** the modules (1) in the floating platform are mutually connected by securing elements, preferably screws.

6. The modular floating unit according to any one of the preceding claims, **characterized in that** the positioning pins (4) are mounted on the grid of the floating platform at positions corresponding to the corners of the individual module (1), wherein the positioning pin (4) comprises a hole extending along its full length.

7. The modular floating unit according to any one of the preceding claims, **characterized in that** the mounting poles (8) are positioned at places corresponding to the positions of the positioning pins (4).

8. The modular floating unit according to any one of the preceding claims, **characterized in that** the securing assembly comprises a stabilizing bar (5), a clamping socket (7), and strengthening elements (6), wherein the clamping socket (7) is arranged to be secured at the upper portion of the mounting pole (8), wherein the upper portion corresponds to the portion being closer to the superstructure unit,
wherein the stabilizing bar (5) is arranged to be positioned within the mounting pole (8) and the positioning pin (4).

9. The modular floating unit according to any one of the preceding claims, **characterized in that** it comprises a mooring system for the floating platform (10) comprising at least one rigid mooring fast (14) and at least mooring line (13), wherein the rigid mooring fasts comprise Cardan joints (15).

10. An assembly of modular floating units, comprising:
at least two modular floating units according to any one of the preceding claims 1-9, and
a series-row securing assembly, arranged to connect at least two modular floating units.

11. The assembly of modular floating units according to claim 10, **characterized in that** the series-row securing assembly comprises supports (3) secured on both modules (1) positioned in series of at least two individual modular floating units, and a bolt (2) which is arranged to connect the supports (3) of the two modules (1) positioned in series.

12. The assembly of modular floating units according to claims 10 or 11, **characterized in that** the grids of the floating platforms of at least two individual modular floating units are connected to each other by means of securing elements, preferably screws.

13. A method for attaching a modular floating unit, comprising the steps of:
a) Providing of a floating platform with positioning pins (4) secured thereto,
b) Providing of a superstructure unit with mounting poles (8) mounted thereto,
c) Positioning of the superstructure unit over the floating platform to position the mounting poles (8) and superimpose them into the positioning pins (4),
d) Descending of the superstructure unit onto the floating platform,
e) Connecting of the superstructure unit to the floating platform.

14. The method of attaching according to claim 13, **characterized in that** step e) of connecting of the superstructure unit to the floating platform comprises step e1) of securing of the clamping socket (7) in the upper side of the mounting pole (8), step e2) of inserting of the stabilizing bar (5) through the clamping socket (7) into the mounting pole (8) and the positioning pin (4), and securing in the floating platform, step e3) of securing and tightening of strengthening elements (6) at both ends of the stabilizing bar (5).
